Europäisches Patentamt

European Patent Office

Office européen des brevets

(11) Publication number: **0 171 991**
**B1**

(12) **EUROPEAN PATENT SPECIFICATION**

(45) Date of publication of patent specification: **21.09.88**

(51) Int. Cl.⁴: **B 25 F 5/00** // B27B19/09

(21) Application number: **85305593.7**

(22) Date of filing: **06.08.85**

(54) Electric jig saw with accessory storage device.

(30) Priority: **10.08.84 US 639406**

(43) Date of publication of application:
**19.02.86 Bulletin 86/08**

(45) Publication of the grant of the patent:
**21.09.88 Bulletin 88/38**

(84) Designated Contracting States:
**DE FR GB IT**

(56) References cited:
**DE-A-1 628 901**
**US-A-3 353 573**

**Page 44 of the Black & Decker Power Tools
Catalogue 1984**

(73) Proprietor: **Black & Decker Inc.
Drummond Plaza Office Park 1423 Kirkwood
Highway
Newark Delaware 19711 (US)**

(72) Inventor: **Somers, Robert I.
3217 Caber Road
Raleigh North Carolina 27612 (US)**

(74) Representative: **Lucas, Brian Ronald et al
Lucas, George & Co. 135 Westhall Road
Warlingham Surrey CR3 9HJ (GB)**

Courier Press, Leamington Spa, England.

## Description

The present invention relates to electric jigsaws, and in particular to storage devices for accessories, such as blades, for jigsaws.

One of the requirements for use of an electric jigsaw is the ability to change the cutting blade removably secured in a reciprocating shaft of the saw. In conventional jigsaws, a screwdriver or wrench is used to release a screw on the end of the reciprocating shaft and a blade is inserted into the end of the shaft. The screw is then tightened to secure the blade in position.

During use of an electric jigsaw, blades frequently break. Also, depending upon the nature of the work being performed with the jigsaw, different blades are required at different times. For example, an initial cut might be done with a rough cutting blade and subsequent finishing cutting done with a finer blade. Also, in the same project, material of differnt types might be cut, such as wood, plastic or metal. Each type of material requires a different blade. It may also be necessary to have blades of different lengths, depending upon the thickness of the material being cut.

Because of the frequent necessity to change blades in an electric jigsaw, a supply of blades, and a tool for releasing the screw securing the blade in position, must be at hand. This frequently presents a problem, particularly where the work is being performed away from a location at which spare blades and tools are kept.

It is the object of the present invention to provide means for conveniently storing attachments and/or accessories for a jigsaw, for example, additional blades and/or a screwdriving device, on the jigsaw itself. In the preferred embodiment, this results in the advantage of permitting easy removal and replacement of blades at the site of the work.

Page 44 of the Black & Decker Power Tools Catalogue 1984 discloses an electric jigsaw having a motor housing, a shoe plate having front and rear ends and being disposed below said housing, an elongated arch secured to said shoe plate, said arch and shoe plate defining an axial cavity therebetween; and means, connected to said housing, for adjustably securing said arch to said housing to permit pivotal adjustment of said shoe plate relative to said housing.

The present invention is characterized in that a plug of resilient material is removably inserted axially in a rear end of said cavity, said plug including a plurality of axially-extending slots open at a forward end thereof for receiving one end of attachments and/or accessories for said jigsaw, the other end of said attachments and/or accessories axially extending into said cavity.

The arch may have a generally C-shaped cross-section.

The plug may have a generally D-shaped cross-section and be frictionally retained in the cavity.

Preferably, the slots are closed at a rear end of the plug, and the slots taper towards the closed end thereof to frictionally secure the attachments and/or accessories therein.

Preferably, one of the slots has removably received therein a screw-driving device and the remainder of the slots have removably received therein blades for the jigsaw.

The adjustably securing means may partially interrupt the cavity, and one of the slots may advantageously be located to accommodate a long jigsaw blade extending forwardly beyond the adjustably securing means, this long jigsaw blade not contacting the adjustably securing means during pivoting of the shoe plate to its fullest extent in either direction relative to the housing. The adjustably securing means may comprise a screw and a clamping plate arranged to releasably engage an inside surface of the arch with said long saw blade being disposed in said cavity below said screw and adjacent said shoe plate.

Preferably, the plug has a reduced forward end shaped to facilitate insertion in the cavity.

Other advantages of the present invention will become more fully apparent from the following detailed description of the preferred embodiment illustrated, by way of example, in the accompanying drawings, in which:

Figure 1 is a side view of a jigsaw according to the invention;

Figure 2 is a partial cutaway view of the shoe and shoe plate shown in the lower part of Fig. 1;

Figure 3 is a cross-sectional view on the line III—III in Fig. 1, but with the shoe plate angularly adjusted;

Figure 4 is a longitudinal cross-sectional view of an accessory holder according to the invention and also shown in Figs. 1, 2 and 3;

Figure 5 is a view of the left hand end of the accessory holder of Fig. 4;

Figure 6 is a view of the right hand end of the accessory holder of Fig. 4, but with the accessories removed; and

Figure 7 is a side view of screw-driving device removed from the accessory holder of Fig. 4.

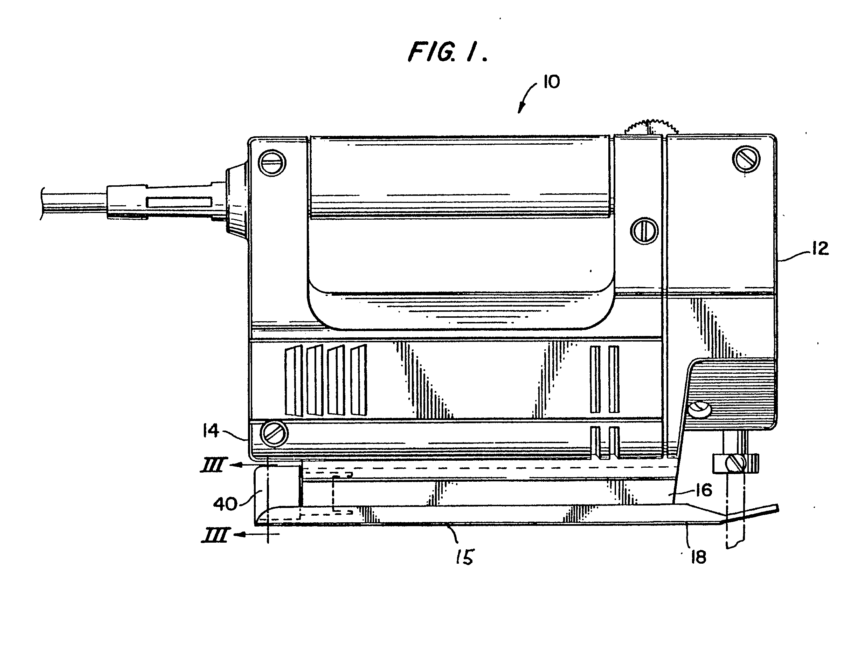

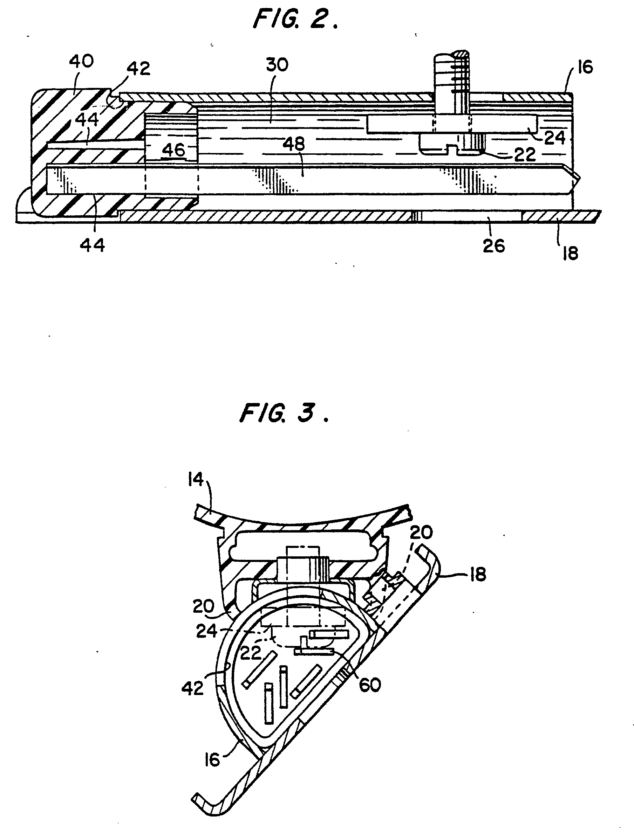

Referring to the drawings, an electric jigsaw comprises a motor housing, a shoe including a pivot arch and a shoe plate, the arch being secured to the shoe plate and securing the shoe plate to the housing for pivotal movement about the longitudinal axis of the arch. As seen in Figs. 1, 2 and 3, the jigsaw 10 includes a motor housing 12 having a base 14, and a shoe 15 which includes a pivot arch 16 and a shoe plate 18. As best seen in Fig. 3, the arch 16 has a generally C-shaped cross-section which is preferably integrally secured to shoe plate 18. Arch 16 supports shoe plate 18 on base 14 of housing 12 such that housing 12 may be pivotally moved about a longitudinal axis of arch 16. Although various methods may be used for mounting the shoe plate and arch to the housing, as shown in Fig. 3, members 20 depend from base 14 of housing 12 to generally engage the outside surface of arch 16. A screw 22 and clamping plate 24 or similar structure releasably engage the inside surface of arch 16 to hold shoe plate 18 in a selected angular position with respect to housing 12. Access to screw 22 is obtained through opening 26 in shoe plate 18.

An axial cavity is defined by and between the arch and the shoe plate. In the embodiment depicted in Figs. 2 and 3, the shoe 15, including the arch and shoe plate 18, cooperate to define an axial cavity 30. The cavity 30 extends the full axial length of shoe 15 between the front and rear ends of housing 12. The cavity 30 is partially interrupted by the structure for releasably securing the shoe plate in various angular positions.

In accordance with the invention, a plug 40 is removably disposed in one end of the cavity 30, the plug including a plurality of axially-extending slots open at one end thereof for removably receiving attachments for the jigsaw. As shown, the plug 40 is removably disposed in the rear end 42 of cavity 30. Plug 40 includes a plurality of axially extending slots 44 open at one end 46 for removably receiving attachments and/or accessories 48, 54, 56 for the jigsaw. Preferably the plug 40 is made of a resilient material such as an elastomeric polymer.

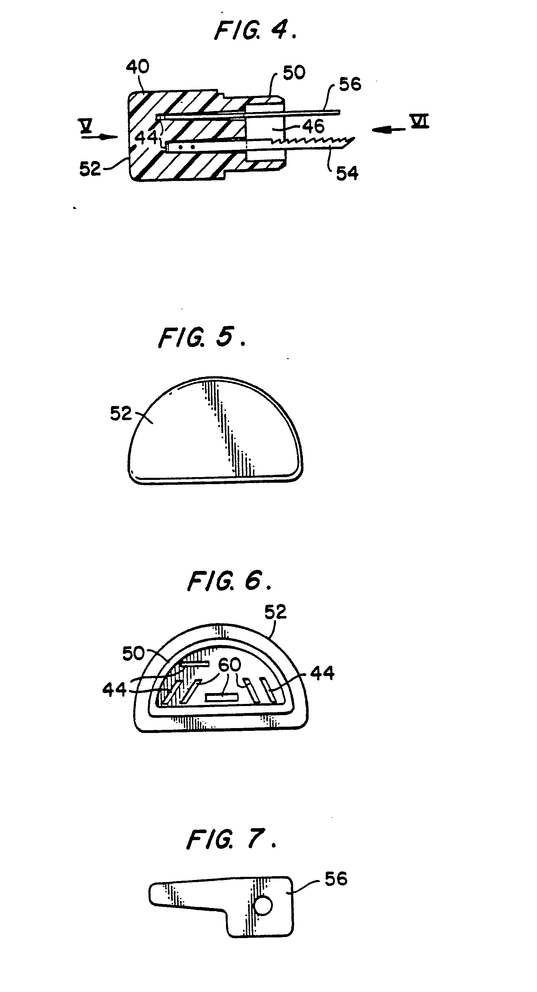

As seen in Figs. 4 to 6, the plug 40 has one end 50 reduced and shaped for removable insertion into the cavity 30. Preferably, the one end 50 of plug 40 has a generally D-shaped cross-section and is frictionally retained in the cavity 30 of shoe 15 which has a complementary D-shaped cross-section as seen in Fig. 3. Preferably, the other end 52 of plug 40 is closed and also has a D-shaped cross-section as shown in Fig. 5. Plug 40 includes at least one axially-extending slot 44 open at one end 46 and closed at the other end. Slots 44 are generally tapered toward the closed end to frictionally secure in the slots attachments such as blades 54, screw-driving device 56, or other tools for use with the jigsaw. The locations of axial slots 44 are selected to provide at least one slot capable of receiving an extra long blade. Thus, the slot arrangement depicted in Fig. 6 provides slots 60 so arranged, that a blade extending from one of the slots 60 will not contact the structure pivotally securing shoe plate 18 to base 14, when shoe plate 18 is pivoted to its full extent in one direction or the other. Thus, slots 60 will accommodate blades at least as long as the axial length of arch 16. The operation of this structure may be seen in Fig. 3 wherein the slot referenced 60 therein is not obstructed by the screw 22, despite the full rotation of the shoe plate 18, and thus may accommodate a blade as long as blade 48 depicted in Fig. 2.

Plug 40 may also accommodate, in at least one slot thereof, a screw-driving device usable to remove and replace blades in the jigsaw. An exemplary type of screw-driving device 56 is shown in Fig. 7.

It will be apparent to those skilled in the art that various modifications and variations could be made in the jigsaw and blade holder without departing from the scope of the invention as defined in the appended claims. For example, in the embodiment of the invention described herein, the shoe is an integral structure. It will be recognized that the arch and shoe plate of the shoe may be separate components of the same or different materials in alternate embodiments.

**Claims**

1. An electric jigsaw having a motor housing (12), a shoe plate (18) having front and rear ends and being disposed below said housing (12), an elongated arch (16) secured to said shoe plate (18), said arch and shoe plate defining an axial cavity (30) therebetween; and means (22, 24), connected to said housing (12), for adjustably securing said arch (16) to said housing to permit pivotal adjustment of said shoe plate (18) relative to said housing (12); characterized in that a plug (40) of resilient material is removably inserted axially in a rear end of said cavity (30), said plug (40) including a plurality of axially-extending slots (44, 60) open at a forward end (46) thereof for receiving one end of attachments and/or accessories (48, 54, 56) for said jigsaw, the other end of said attachments and/or accessories (48, 54, 56) axially extending into said cavity (30).

2. The jigsaw of Claim 1, characterized in that said arch (16) has a generally C-shaped cross-section.

3. The jigsaw of Claim 1 or 2, characterized in that said plug (40) is formed of an elastomeric polymer.

4. The jigsaw of Claim 1, 2 or 3, characterized in that said plug (40) has a generally D-shaped cross-section and is frictionally retained in said cavity (30).

5. The jigsaw of Claim 4, characterized in that said slots (44, 60) are closed at a rear end (52) of said plug, and wherein said slots (44, 60) taper towards the closed end thereof to frictionally secure said attachments and/or accessories (48, 54, 56) in said slots (44, 60).

6. The jigsaw of any preceding claim, characterized in that one of said slots (44) has removably received therein a screw-driving device (56) and the remainder of said slots have removably received therein blades (48, 54) for said jigsaw.

7. The jigsaw of any preceding claim, characterized in that said adjustably securing means (22, 24) partially interrupts said cavity (30), and one of said slots (60) is located to accommodate a long jigsaw blade (48) extending forwardly beyond said adjustably securing means (22, 24), said long jigsaw blade (48) not contacting said adjustably securing means (22, 24) during pivoting of said shoe plate (18) to its fullest extent in either direction relative to said housing (12).

8. The jigsaw of Claim 7, characterized in that said adjustably securing means (22, 24) comprises a screw (22) and a clamping plate (24) arranged to releasably engage an inside surface of said arch (16), and said long saw blade (48) is disposed in said cavity (30) below said screw (22) and adjacent said shoe plate (18).

9. The jigsaw of any preceding claim, characterized in that said arch (16) extends between front and rear ends of said housing (12) and for the length of said shoe plate (18) between the front and rear ends thereof.

10. The jigsaw of any preceding claim, characterized in that said plug (40) has a reduced forward end shaped to facilitate insertion in said cavity (30).

**Patentansprüche**

1. Elektrische Stichsäge mit einem Motorgehäuse (12), einer Schuhplatte (18) mit vorderen und hinteren Enden, die unterhalb des Gehäuses (12) angeordnet ist, einem an der Schuhplatte (18) befestigten länglichen Haltebogen (16), wobei zwischen Haltebogen und Schuhplatte ein axialer Hohlraum (30) gebildet ist, und mit dem Gehäuse (12) verbundenen Mitteln (22, 24) zur einstellbaren Befestigung des Haltebogens (16) am Gehäuse, um eine Schwenkeinstellung der Schuhplatte (18) bezüglich des Gehäuses (12) zu ermöglichen, dadurch gekennzeichnet, daß in das hintere Ende des Hohlraums (30) entfernbar ein Stopfen (40) aus elastischem Material eingesetzt ist, der mehrere sich axial erstreckende Schlitze (44, 60) aufweist, die an einem vorderen Ende (46) zur Aufnahme eines Endes eines Zusatzes und/oder Zubehörs (48, 54, 56) der Stichsäge offen sind, wobei sich das andere Ende des Zusatzes und/oder Zubehörs (48, 54, 56) sich axial in den Hohlraum (30) erstreckt.

2. Stichsäge nach Anspruch 1, dadurch gekennzeichnet, daß der Haltebogen (16) einen im wesentlichen C-förmigen Querschnitt hat.

3. Stichsäge nach Anspruch 1 oder 2, dadurch gekennzeichnet, daß der Stopfen (40) aus einem elastomeren Polymeren hergestellt ist.

4. Stichsäge nach Anspruch 1, 2 oder 3, dadurch gekennzeichnet, daß der Stopfen (40) einen im wesentlichen D-förmigen Querschnitt hat und durch Reibung im Hohlraum (30) gehalten ist.

5. Stichsäge nach Anspruch 4, dadurch gekennzeichnet, daß die Schlitze (44, 60) an einem hinteren Ende (52) des Stopfens geschlossen sind, wobei sich die Schlitze (44, 60) zum geschlossenen Ende verjüngen, um die Zusätze und/oder das Zubehör (48, 54, 56) durch Reibung in den Schlitzen (44, 60) festzuhalten.

6. Stichsäge nach einem der vorhergehenden Ansprüche, dadurch gekennzeichnet, daß einer Schlitze (44) entfernbar eine Schraubendrehereinrichtung (56) aufnimmt und die übrigen Schlitze entfernbar Blätter (48, 54) für die Stichsäge Aufnehmen.

7. Stichsäge nach einem der vorhergehenden Ansprüche, dadurch gekennzeichnet, daß die einstellbaren Befestigungsmittel (22, 24) teilweise den Hohlraum (30) unterbrechen und einer der Schlitze (60) zur Aufnahme eines langen Stichsägeblattes (48), das sich nach vorn über die einstellbaren Befestigungsmittel (22, 24) hinauserstreckt, angeordnet ist, wobei das lange Stichsägeblatt (48) die einstellbaren Befestigungsmittel (22, 24) während des Verschwenkens der Schuhplatte (18) in vollem Umfang in beide Richtungen bezüglich des Gehäuses (12) nicht berührt.

8. Stichsäge nach Anspruch 7, dadurch gekennzeichnet, daß die einstellbaren Befestigungsmittel (22, 24) eine Schraube (22) und eine Klemmplatte (24) aufweisen, die in lösbaren Eingriff mit einer Innenfläche des Haltebogens (16) bringbar sind, und sich das lange Sägeblatt (48) in Hohlraum (30) unterhalb der Schraube (22) und benachbart zur Schuhplatte (18) befindet.

9. Stichsäge nach einem der vorhergehenden Ansprüche, dadurch gekennzeichnet, daß der Haltebogen (16) sich zwischen den vorderen und hinteren Enden des Gehäuses und über die Länge der Schuhplatte (18) zwischen deren vorderen und hinteren Enden erstreckt.

10. Stichsäge nach einem der vorhergehenden Ansprüche, dadurch gekennzeichnet, daß der Stopfen (40) ein verringertes vorderes Ende aufweist, das zu Erleichterung des Einsetzens in den Hohlraum (40) geformt ist.

**Revendications**

1. Une scie sauteuse électrique comportant un carter de moteur (12), une plaque de semelle (18) ayant des extrémités avant et arrière et étant disposée sous ledit carter (12), une voûte allongée (16) fixée à ladite plaque de semelle (18), ladite voûte et ladite plaque de semelle définissant entre elles une cavité axiale (30); et un moyen (22, 24), relié audit carter (12), pour fixer de manière réglable ladite voûte (16) audit carter pour permettre un réglage en pivotement de ladite semelle (18) par rapport audit carter (12); caractérisée en ce qu'un bouchon (40) en matière élastique est introduit de façon amovible dans une extrémité arrière de ladite cavité (30), ledit bouchon (40) comportant une pluralité de fentes s'étendant axialement (44, 60), ouvertes à leur extrémité avant (46) pour recevoir une extrémité d'accessoires et/ou d'équipements (48, 54, 56) pour ladite scie sauteuse, l'autre extrémité desdits accessoires et/ou équipements (48, 54, 56) s'étendant axialement dans ladite cavité (30).

2. La scie sauteuse de la revendication 1, caractérisée en ce que ladite voûte (16) a une section sensiblement en forme de C.

3. La scie sauteuse de la revendication 1 ou 2, caractérisée en ce que ledit bouchon (40) est en élastomère.

4. La scie sauteuse de la revendication 1, 2 ou 3, caractérisée en ce que ledit bouchon (40) a une section sensiblement en forme de D et est retenu par frottement dans ladite cavité (30).

5. La scie sauteuse de la revendication 4, caractérisée en ce que lesdites fentes (44, 60) sont fermées à une extrémité arrière (52) dudit bouchon, et que lesdites fentes (44, 60) se rétrécissent vers leur extrémité fermée pour retenir par frottement lesdits accessoires et/ou équipements (48, 54, 56) dans lesdites fentes (44, 60).

6. La scie sauteuse de l'une quelconque des revendications précédentes, caractérisée en ce que l'une des fentes (44) reçoit intérieurement, de façon amovible, un dispositif de tournevis (56), et les autre fentes reçoivent intérieurement, de façon amovible, des lames (48, 54) pour ladite scie sauteuse.

7. La scie sauteuse de l'une quelconque des revendications précédentes, caractérisée en ce que ledit moyen de fixation réglable (22, 24) interrompt partiellement ladite cavité (30), et l'une desdites fentes (60) est placée de façon à recevoir une lame longue (48) de scie sauteuse, avançant au-delà dudit moyen de fixation réglable (22, 24), ladite lame longue de scie sauteuse (48) ne touchant pas ledit moyen de fixation réglable (22, 24) lors du pivotement à fond de ladite plaque de semelle (18) dans chaque sens par rapport audit carter (12).

8. La scie sauteuse de la revendication 7, caractérisée en ce que ledit moyen de fixation réglable (22, 24) comprend une vis (22) et une plaque de blocage (24) arrangée pour s'appuyer de façon desserrable contre une surface interne de ladite voûte (16), et ladite lame de scie longue (48) est disposée dans ladite cavité sous ladite vis (22) et près de ladite plaque de semelle (18).

9. La scie sauteuse de l'une quelconque des revendications précédentes, caractérisée en ce que ladite voûte (16) s'étend entre les extrémités avant et arrière dudit carter (12), et sur la longueur de ladite plaque de semelle (18) entre ses extrémités avant et arrière.

10. La scie sauteuse de l'une quelconque des revendications précédentes, caractérisée en ce que ledit bouchon (40) a une forme dont l'extrémité avant est rétrécie pour faciliter son introduction dans ladite cavité (30).

FIG. I.

0 171 991

*FIG. 2.*

*FIG. 3.*

2

# FIG. 4.

# FIG. 5.

# FIG. 6.

# FIG. 7.

3